# EUROPÄISCHE PATENTSCHRIFT

(11) **EP 3 347 251 B1**
(45) Veröffentlichungstag und Bekanntmachung des Hinweises auf die Patenterteilung: **06.11.2019**
(21) Anmeldenummer: 16765945.7
(22) Anmeldetag: 06.09.2016
(51) Int. Cl.: B60T 17/02, F15B 21/04

(54) **VERFAHREN UND EINRICHTUNG ZUR STEUERUNG EINER LUFTTROCKNEREINHEIT EINER LUFTVERSORGUNGSANLAGE FÜR DIE HAUPT- UND HILFSLUFTVERSORGUNG, INSBESONDERE FÜR EIN SCHIENENFAHRZEUG**
METHOD AND DEVICE FOR CONTROLLING AN AIR DRYER UNIT OF AN AIR SUPPLY SYSTEM FOR PRIMARY AND AUXILIARY AIR SUPPLY, IN PARTICULAR FOR A RAIL VEHICLE
PROCÉDÉ ET DISPOSITIF DE COMMANDE D'UNE UNITÉ DESSICATEUR D'AIR D'UNE INSTALLATION D'ALIMENTATION EN AIR POUR L'ALIMENTATION EN AIR PRINCIPALE ET AUXILIAIRE, EN PARTICULIER POUR UN VÉHICULE FERROVIAIRE

(30) Priorität: 11.09.2015 DE 102015115368
(43) Veröffentlichungstag der Anmeldung: 18.07.2018
(73) Patentinhaber: KNORR-BREMSE Systeme für Schienenfahrzeuge GmbH, 80809 München (DE)
(72) Erfinder: MERKEL, Thomas, 50354 Hürth (DE); BERGER, Peter, 85716 Unterschleißheim (DE); ASSMANN, Gert, 80337 München (DE); URRA, Christian, 80371 München (DE); RIEDI, Angelika, 81543 München (DE); GEHRKE, Philipp, 80805 München (DE)
(86) Internationale Anmeldenummer: PCT/EP2016/070902
(87) Internationale Veröffentlichungsnummer: WO 2017/042140

(56) Entgegenhaltungen:
- WO-A1-99/43527
- DE-A1-102006 048 071
- DE-A1-102013 109 475

## Beschreibung

Die Erfindung betrifft ein Verfahren und eine Einrichtung zur Steuerung mindestens einer Lufttrocknereinheit einer Luftversorgungsanlage für die Haupt- und Hilfsluftversorgung eines Fahrzeuges, insbesondere eines Schienenfahrzeuges, bei welchem durch mindestens einen über einen zugeordneten Elektromotor angetriebenen Kompressor sowohl die Hauptluftversorgung eines Hauptluftbehälters als auch die Hilfsluftversorgung eines Hilfsluftbehälters durchgeführt wird, wobei die vom Kompressor erzeugte Druckluft über die mindestens eine nachgeschaltete Lufttrocknereinheit geleitet wird, mit der die vom Kompressor erzeugte Druckluft getrocknet wird, wobei das je nach Art der Lufttrocknereinheit verwendete Trockenmittel mit getrockneter Druckluft regeneriert wird.

Das Einsatzgebiet der Erfindung erstreckt sich vornehmlich auf den Schienenfahrzeugbau. Der insoweit von einem Elektromotor angetriebene Kompressor erzeugt Druckluft, welche zur Versorgung von pneumatischen Aggregaten, wie beispielsweise einer Fahrzeugbremsanlage, verwendet wird. Hierfür ist die vom Kompressor aus der Umgebungsluft erzeugte Druckluft zunächst einer Lufttrocknereinheit zuzuführen, welche der Druckluft weitesgehend die Feuchtigkeit entzieht.

Neben einer solchen Hauptluftversorgung kann gemäß des allgemein bekannten Standes der Technik ein separater fahrzeugbatterie betriebener Hilfsluftkompressor zur Realisierung einer Hilfsluftversorgung verwendet werden. Die Hilfsluftversorgung kann die erforderliche pneumatische Energie für den Stellantrieb eines Pantographen oder dergleichen bereitstellen. Ein Pantograph stellt im ausgefahrenen Zustand eine elektrische Energieversorgung für das Fahrzeug über eine elektrische Oberleitung her. Der pneumatische Stellantrieb bewegt den Pantographen zwischen der ausgefahrenen Stellung und einer eingefahrenen Stellung, in welcher der elektrische Oberleitungskontakt unterbrochen ist. Zum Aufrüsten des Fahrzeuges, also zur Herstellung der Betriebsbereitschaft durch unter anderem Herstellung des elektrischen Oberleitungskontakts, wird der separate Hilfsluftkompressor durch die Fahrzeugbatterie des Fahrzeugs mit elektrischer Energie versorgt und besitzt eine relativ geringe Förderleistung. Die elektrische Energie der Fahrzeugbatterie ist dabei ausreichend, um den Hilfsluftkompressor elektromotorisch anzutreiben, so dass auf diese Weise hinreichend Druckluft zur Hilfsluftversorgung erzeugbar ist.

Aus der DE 10 2013 109 475 A1 geht eine andere technische Lösung hervor, bei welcher ein solcher separater Hilfsluftkompressor entbehrlich ist, da dessen Funktion von dem Hauptkompressor des Fahrzeuges mit übernommen wird. Zur Hilfsluftversorgung über den Kompressor wird dessen abtreibender Elektromotor über einen Frequenzumrichter mit der von der Fahrzeugbatterie bereitgestellten elektrischen Energie betrieben. Die so erzeugte Antriebsenergie reicht aus, um den Hauptkompressor mit relativ geringer Drehzahl zu betreiben und die Druckluft zur Hilfsluftversorgung wird von einer Nebenleitung der Druckluftspeiseleitung zum Hauptluftbehälter hin abgezweigt. Diese Hilfsluftabzweigung erfolgt hinter der dem Hauptkompressor nachgeschalteten Lufttrocknereinheit, damit getrocknete Hilfsluft zur Verfügung steht.

Die Lufttrocknereinheit ist bei diesem Stand der Technik als ein Adsorptionslufttrockner ausgeführt. Der Adsorptionslufttrockner ist hier nach Art eines Zweikammer-Trockners ausgebildet und umfasst zwei parallel betreibare und mit einem Trockenmittel befüllte Lufttrocknerpatronen, welche wechselseitig in einer Trocknungsphase und Regenerationsphase in allgemein bekannter Weise betreibar sind. In Folge dessen wird stets ein Teil der getrockneten Druckluft zur Regeneration verbraucht.

Eine Lufttrocknereinheit kann alternativ hierzu jedoch auch als ein Membranlufttrockner ausgebildet sein. Ein Membranlufttrockner arbeitet über Diffusion und besteht aus einer großen Anzahl von in Längsrichtung parallel zueinander verlaufenden Hohlfasern. Die trocknende Druckluft durchströmt diese Fasern in Längsrichtung. Durch den speziellen Aufbau und die Materialeigenschaften der Hohlfasern kann Wasser deren Seitenwände schneller durchdringen als Luft. Das Konzentrationsgefälle an Luftfeuchtigkeit zwischen dem Inneren der Hohlfasern und deren Umgebung führt zur Diffusion des der Luftfeuchtigkeit entzogenen Wassers vom Faserinneren zum Faseräußeren. Dort wird das Kondensat dann abgeleitet. Mit Hilfe bereits getrockneter Druckluft, welche in Gegenströmrichtung außen entlang der Hohlfasern geführt wird, erfolgt die Regeneration der hier als Hohlfasern ausgebildeten Trockenmittel. Auch hierfür wird getrocknete Druckluft verbraucht, welche dem Hauptluftstrom dann nicht mehr zur Verfügung steht.

Aus der WO 2013/150110 geht ein anderer Adsorptionslufttrockner mit zwei zueinander parallel geschalteten und im Trocken- sowie Regenerationsbetrieb wechselseitig betreibbaren Lufttrocknerpatronen hervor. Hier ist eine Regenerationleitung vorgesehen, über welche getrocknete Druckluft unter Umgehung mindestens einer der Lufttrocknerpatronen wieder zurück zur Eingangsseite des Absorptionslufttrockners führbar ist. Hierüber wird die Regeneration durchgeführt.

Es ist nachteilhaft beim Stand der Technik, dass während der Hilfsluftversorgung, die vorrangig dem Wiederauffüllen des Hilfsluftbehälters dient, auch getrocknete Druckluft zur Regeneration der Lufttrocknereinheit verbraucht wird. Hierdurch verzögert sich das Wiederauffüllen des Hilfsluftbehälters, insbesondere dann, wenn dies im Rahmen des Aufrüstens eines Schienenfahrzeuges mit Pantographen-Stromversorgung geschieht, weil die Zeitdauer zur Herstellung der Betriebsbereitschaft des Fahrzeuges, also das Ausfahren des Pantographen, bei einer batteriebetriebenen Hilfsluftversorgung weiter verzögert wird.

Aus der WO 99/43527 A1 geht eine Einrichtung und Verfahren hervor, zur Steuerung mindestens einer Lufttrocknereinheit, einer Luftversorgungsanlage für die Haupt- und Hilfsluftversorgung eines Fahrzeuges, bei welchem durch mindestens einen über einen zugeordneten Elektromotor angetriebenen Kompressor sowohl die Hauptluftversorgung eines Hauptluftbehälters als auch die Hilfsluftversorgung eines Hilfsluftbehälters durchgeführt wird, wobei die vom Kompressor erzeugte Druckluft über die mindestens eine nachgeschaltete Lufttrocknereinheit geleitet wird, mit der die vom Kompressor erzeugte Druckluft getrocknet wird, wobei das Trockenmittel der Lufttrocknereinheit mit getrockneter Druckluft regeneriert wird.
Es sind allerdings keine Maßgaben angegeben, mit denen eine zügige Hilfsluftversorgung ermöglicht wird.

Es ist daher die Aufgabe der vorliegenden Erfindung ein Verfahren und eine Einrichtung zur Steuerung einer Lufttrocknereinheit einer Luftversorgungsanlage für die Haupt- und Hilfsluftversorgung eines Fahrzeuges zu schaffen, welches/welche mit einfachen technischen Mitteln eine zügige Hilfsluftversorgung und damit ein schnelles Aufrüsten eines Fahrzeuges ermöglicht.

Die Aufgabe wird verfahrenstechnisch ausgehend von einem Verfahren gemäß dem Oberbegriff von Anspruch 1 in Verbindung mit dessen kennzeichnenden Merkmalen gelöst. Hinsichtlich einer hierzu korrespondierenden technischen Einrichtung wird auf Anspruch 7 verwiesen. Die jeweils rückbezogenen abhängigen Ansprüche geben vorteilhafte Weiterbildung der Erfindung wieder.

Die Erfindung schließt die technische Lehre ein, dass während der Hilfsluftversorgung der zur Regeneration der mindestens einen Lufttrocknereinheit verwendete Luftstrom reduziert oder gänzlich unterbunden wird, so dass bei der Hilfsluftversorgung gegenüber der Hauptluftversorgung ein höherer bzw. der gesamte durch den Kompressor gelieferte Volumenstrom zum Auffüllen des Hilfsluftbehälters zur Verfügung steht.

Der Vorteil der erfindungsgemäßen Lösung liegt insbesondere daran, dass die Lufttrocknereinheit mit einfachen steuerungstechnischen Maßnahmen während der Hilfsluftversorgung eine Regeneration von Trockenmittel zumindest reduziert, damit die hierdurch eingesparte getrocknete Druckluft der Hilfsluftversorgung zugeschlagen werden kann. Hierdurch wird das Aufrüsten des Fahrzeuges gegenüber dem Stand der Technik wesentlich verkürzt und das Fahrzeug ist schneller betriebsbereit.

Gemäß einer die Erfindung verbessernden Maßnahme wird vorgeschlagen, dass nach dem Ausschalten des mindestens einen Kompressors der Luftversorgungsanlage getrocknete Druckluft aus einem im Rahmen der Hauptluftversorgung vorgesehenen Hauptluftbehälter und/oder dem Hilfsluftbehälter zur Regeneration des Trockenmittels durch die mindestens eine Lufttrocknereinheit geleitet wird. Mit anderen Worten wird nach dem Ausschalten der Luftversorgungsanlage durch Behälterentleerung über die Lufttrocknereinheit sichergestellt, dass das Fahrzeug mit hinreichend regeneriertem Trockenmittel abgestellt wird. Bei einer Wiederinbetriebnahme des Fahrzeugs und dem damit verbundenen Aufrüsten kann die anfängliche batteriebetriebene Hilfsluftversorgung mit getrockneter Druckluft über die Lufttrocknereinheit sichergestellt werden, obwohl in dieser Phase eine Regeneration des Trockenmittels unterbunden wird. Diese steuerungstechnische Maßnahme lässt sich in einfacher Weise über eine intelligente Umschalteinrichtung realisieren, die nach dem Ausschalten der Luftversorgungsanlage beim Abstellen des Fahrzeuges die bevorratete getrocknete Druckluft zur Regeneration der Lufttrocknereinheit zumindest teilweise verbraucht. Hierfür führt die besagte Umschalteinrichtung beispielsweise die Druckluft aus dem Hauptluftbehälter bei deaktivierter Luftversorgungsanlage vor die Lufttrocknereinheit zurück. Die Lufttrocknereinheit sollte so ausgeführt sein, dass diese automatisch nach dem Trocknungsintervall den Druckluftverbrauch abschaltet, um Druckluft zu sparen. Somit kann beim nächsten Aufrüsten eventuell noch genügend Druckluft im Hilfsluftbehälter vorhanden sein, so dass selbst eine Befüllung des Hilfsluftbehälters durch den Kompressor gegebenenfalls auch unterbleiben kann.

Das Abstellen der Lufttrocknereinheit im durchgetrockneten Zustand kann alternativ hierzu auch durch eine Nachlaufsteuerung des Kompressors realisiert werden. Hierbei würde der Kompressor länger betrieben werden, als dies zum Auffüllen der Behälter notwendig wäre. Durch Anpassung der Ansteuerparameter der Lufttrocknereinheit in dieser Phase kann der Trocknungseffekt optimiert werden.

Vorzugsweise wird eine Umschaltung der mindestens einen Lufttrocknereinheit in die Phase der Hilfsluftversorgung in Abhängigkeit vom Druck im Hilfsluftbehälter durchgeführt. Die Umschaltung kann dabei mechanisch, pneumatisch, elektrisch oder hydraulisch erfolgen.

Gemäß einer alternativen Ausführungsform der Erfindung können auch mehrere Kompressoren, vorzugsweise mit unterschiedlicher Förderleistung, für die Haupt- und Hilfsluftversorgung eingesetzt werden, wobei in der Phase der Hilfsluftversorgung insbesondere zum Aufrüsten des Fahrzeuges ein oder ein Teil der Kompressoren mit geringerer Förderleistung über die Fahrzeugbatterie betrieben wird. Mit anderen Worten füllen hierbei mehrere parallel geschaltete Kompressoren über mindestes eine Lufttrocknereinheit den Hauptluftbehälter und den Hilfsluftbehälter. Wird dabei vorzugsweise nur ein einzigen Kompressor geringerer Förderleistung für die Hilfsluftversorgung eingesetzt, so wird hierfür weniger elektrische Leistung benötigt, die aus der Fahrzeugbatterie zu entnehmen ist. Hierdurch wird die Fahrzeugbatterie geschont.

Gemäß einer anderen alternativen Ausführungsform der Erfindung wird vorgeschlagen, dass die Luftversorgungsanlage mehrere Lufttrocknereinheiten umfasst, die zueinander parallel geschaltet sind. Im Rahmen dieser Parallelschaltung ist mindestens ein Ventil zur Aktivierung einer der Lufttrocknereinheiten oder eine Teilmenge der Lufttrocknereinheiten in der Phase der Hilfsluftversorgung vorgesehen. Daneben ist es jedoch auch denkbar, mehrere Luftrocknereinheiten in Reihe miteinander zu verschalten, wobei auch hier mindestens ein Ventil zur Aktivierung mindestens einer der Lufttrocknereinheiten in der Phase der Hilfsluftversorgung vorgesehen ist. Es sei darauf hingewiesen, dass jede Lufttrocknereinheit auch mit einem oder mehreren Vorfiltern oder Kondensatabscheidern zu einer Baueinheit zusammengefasst sein kann. Werden eine oder eine Teilauswahl von mehreren Lufttrocknereinheiten für die Hilfsluftversorgung aktiviert, so lässt sich der Trocknungsbedarf auf den Volumenstrom für das Auffüllen des Hilfsluftbehälters anpassen.

Bei all den vorstehend erläuterten und weiteren denkbaren Ausführungsvarianten stellt eine Steuereinheit durch Ansteuerung entsprechender Ventile sicher, dass während der Hilfsluftversorgung, insbesondere beim Aufrüsten des Fahrzeuges, eine Regeneration des Trockenmittels reduziert oder unterbunden wird und dabei vorzugsweise nur eine einzige Lufttrocknereinheit angesteuert wird. Die Steuereinheit ist vorzugsweise als eine elektronische Steuereinheit ausgebildet und die hiervon angesteuerten Ventile zur Umsetzung der erfindungsgemäßen Steuerung sind vorzugsweise als elektronpneumatische Ventile ausgebildet. Es ist jedoch auch denkbar, dass die Steuerung mechanisch, pneumatisch oder hydraulisch durchgeführt werden kann.

Weitere die Erfindung verbessernde Maßnahmen werden gemeinsam mit der Beschreibung von Ausführungsbeispielen anhand der Figuren näher dargestellt. Es zeigt:
- Figur 1: ein schematisches Blockschaltbild einer Einrichtung zur Steuerung einer Lufttrocknereinheit einer Luftversorgungsanlage für die Haupt- und Hilfsluftversorgung mit Rückströmfunktion,
- Figur 2: eine schematische Blockschaltbilddarstellung eines Teils der Luftversorgungsanlage mit mehreren zueinander parallel geschalteten Lufttrocknereinheiten, und
- Figur 3: eine schematische Blockschaltbilddarstellung eines Teils der Luftversorgungsanlage mit mehreren in Reihe geschalteten Lufttrocknereinheiten.

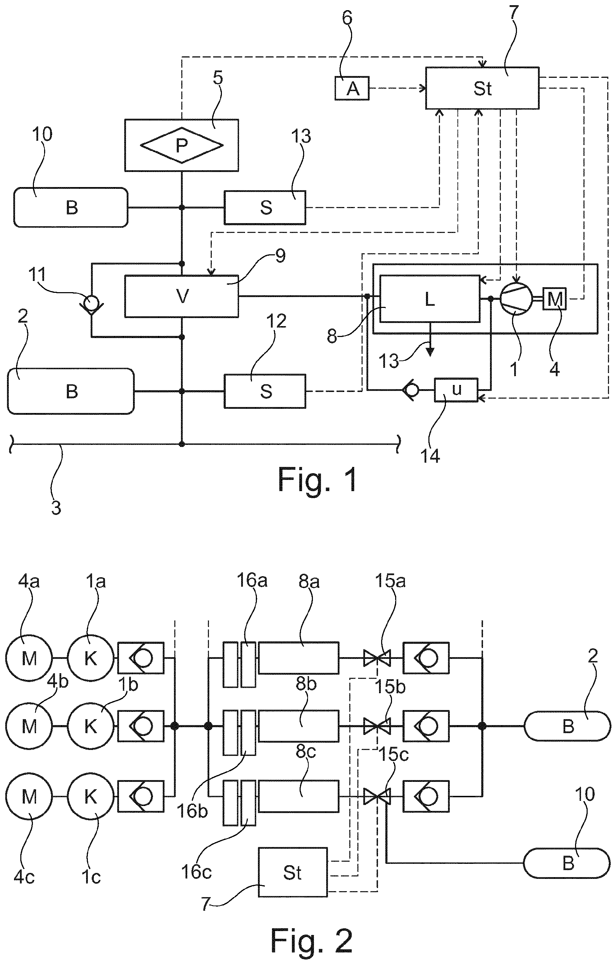

Gemäß Figur 1 ist im Rahmen eine Haupt- und Hilfsluftversorgung eines - nicht weiter dargestellten - elektrisch betriebenen Schienenfahrzeuges ein Kompressor 1 zur Erzeugung von Druckluft für die Befüllung eines Hauptluftbehälters 2 sowie einer hiermit verbundenen Hauptluftbehälterleitung 3 vorgesehen. Der Kompressor 1 wird durch einen Elektromotor 4 angetrieben. Die elektrische Energie für den Antrieb des Elektromotors 4 wird während des normalen Betriebs des Schienenfahrzeuges über einen Pantographen 5 per Oberleitungsanschluss bezogen. Für eine weitere elektrische Energieversorgung dient eine an Bord des Fahrzeuges angeordnete Fahrzeugbatterie 6. Die elektrische Energieversorgung mittels Pantographen 5 und Fahrzeugbatterie 6 wird über einen elektronische Steuereinheit 7 gesteuert (Strichlinien), welche unter anderem auch einen integrierten Umrichter zur Variation von Spannung und Frequenz für den Antrieb des Elektromotors 4 enthält, der hier als Drehstrommotor ausgebildet ist.

Ein dem Pantographen 5 zugeordneter pneumatischer Stellantrieb wird zum Ein- und Ausfahren des Pantographen 5 mit der vom Kompressor 1 erzeugten und über eine Lufttrocknereinheit 8 getrockneten Druckluft betrieben.Da in der Phase des Aufrüstens des Fahrzeuges, in welcher der Pantograph 5 sich noch in der eingefahrenen Ruheposition befindet, keine elektrische Energie von der Oberleitung her zur Verfügung steht, wird der Elektromotor 4 des Kompressors 1 zunächst über die Fahrzeugbatterie 6 mit elektrischer Energie versorgt. Die von der Fahrzeugbatterie 6 aufbringbare elektrische Energie genügt in dieser Phase des Aufrüstens des Fahrzeuges, um den Kompressor 1 mit geringer Förderleistung zu betreiben, welche zum Füllen des Hilftluftbehälters 10 und zum anschließenden Ausfahren des Pantoraphen 5 über dessen pneumatischen Stellantrieb ausreicht.

Zu diesem Zweck wird die vom Kompressor 1 batteriebetrieben erzeugte Druckluft über ein Schaltventil 9, welches hier als elektropneumatisches 3/2-Wegeventil ausgebildet ist, nach Maßgabe der elektronischen Steuereinheit 7 einen Hilfsluftbehälter 10 zugeführt. Der Hilfsluftbehälter 10 bevorratet die Druckluft zum Antrieb des Pantographen 5. Außerhalb der Phase des Aufrüstens des Fahrzeuges führt das Schaltventil 9 die vom Kompressor 1 erzeugte und über die Lufttrocknereinheit 8 getrocknete Druckluft dem Hauptluftbehälter 2 des Fahrzeuges zu. Die Befüllung des Hauptluftbehälters 2 erfolgt vorzugsweise während des normalen Betriebs des Fahrzeuges mit elektrischer Energieversorgung über den Pantographen 5.

Befindet sich zum Zeitpunkt eines Aufrüstens des Fahrzeuges noch genügend Druckluft im Hauptluftbehälter 2, so kann die Befüllung eines entleerten Hilfsluftbehälters 10 auch hieraus erfolgen. Zu diesem Zweck ist ein zum Schaltventil 9 parallel geschaltetes Rückschlagventil 11 mit Durchlassrichtung vom Hauptluftbehälter 2 zum Hilfsluftbehälter 10 vorgesehen.

Die elektronische Steuereinheit 7 gibt dem elektropneumatischen Schaltventil 9 das elektrische Schaltsignal vor (Punktlinie), um die Haupt- oder Hilfsluftversorgung des Fahrzeuges nach Maßgabe der vorstehend erläuterten Logik durchzuführen. Der elektronischen Steuereinheit 7 wird signaleingansseitig ein Drucksignal eines ersten Drucksensors 12 am Hauptluftbehälter 2 sowie eines zweiten Drucksensors 13 am Hilfsluftbehälter 10 zugeführt (Punktlinien). Hieraus ermittelt die elektronische Steuereinheit 7 nach Maßgabe der vorstehend erläuterten Logik das Schaltsignal für das elektropneumatische Schaltventil 9. Außerdem übernimmt die elektronische Steuereinheit 7 die Ansteuerung des Kompressors 1 sowie auch die Ansteuerung der Lufttrocknereinheit 8 hinsichtlich des Trocken- und Regenerationsbetriebs (Punktlinien).

Hinsichtlich des Schaltventils 9 wird in einer ersten Schaltstellung des 3/2-Wegeventils der vom Kompressor 1 generierte Speisedruck dem Hilfsluftbehälter 10 - insbesondere in der Phase des Aufrüstens des Fahrzeuges - zugeführt und in einer zweiten Schaltstellung wird der vom Kompressor 1 generierte Speisedruck dem Hauptluftbehälter 2 zugeführt, um die Hauptluftversorgung des Fahrzeuges sicherzustellen.

Weiterhin unterbindet oder reduziert die elektronische Steuereinheit 7 in erfindungsgemäßer Weise während der Hilfsluftversorgung den zur Regeneration der Lufttrocknereinheit 8 verwendeten Luftstrom. In Folge dessen steht während der Phase der Hilfsluftversorgung gegenüber der Phase der Hauptluftversorgung der gesamte bzw. ein höherer Anteil der durch den Kompressor 1 gelieferte Volumenstrom zum Auffüllen des Hilfsluftbehälters 10 zur Verfügung und es gelangt keine oder weniger Regenerationsluft über einen hierfür vorgesehenen Auslass an die Umgebung.

Im Rahmen einer Rückströmfunktion leitet ein über die elektronische Steuereinheit angesteuertes Umschaltventil 14 im ausgeschalteten Zustand des Kompressors 1 getrocknete Druckluft aus dem Hauptluftbehälter 2 oder dem Hilfsluftbehälter 10 durch die Lufttrocknereinheit 8, um das hierin enthaltene Trockenmittel nach dem Abstellen der Luftversorgungsanlage zu regenerieren. Die verbrauchte Druckluft gelangt aus dem Auslass an der Lufttrocknereinheit 8 an die Umgebung.

Das in der Figur 2 dargestellte weitere Ausführungsbeispiels konzentriert sich auf den Bereich der Drucklufterzeugung und -trocknung zur Haupt- und Hilfsluftversorgung durch Befüllen des Hauptluftbehälters 2 und des Hilfsluftbehälters 10. Bei diesem Ausführungsbeispiel werden im Unterschied zu dem vorstehend beschriebenen Ausführungsbeispiel mehrere Kompressoren 1a bis 1c mit je zugeordnetem Elektromotor 4a bis 4c zur Haupt- und Hilfsluftversorung eingesetzt. In der Phase der Hilfsluftversorgung zum Aufrüsten des Fahrzeuges wird hier jedoch nur ein einziger Kompressor 1a über die - hier nicht weiter dargestellte - Fahrzeugbatterie 6 betrieben, welche die dafür erforderliche elektrische Energie dem vorgeschalteten Elektromotor 4a zur Verfügung stellt.

Ferner umfasst die Luftversorgungsanlage dieses Ausführungsbeispiels mehrere Lufttrocknereinheiten 8a bis 8c, die zueinander parallel geschaltet sind. Entsprechend zugeordnete Ventile 15a bis 15c aktivieren die Lufttrocknereinheiten 8a bis 8c nach Maßgabe der elektronischen Steuerung 7 (Punktlinie). Jedem der Lufttrocknereinheiten 8a bis 8c ist ein Vorfilter 16a bis 16c zugeordnet.

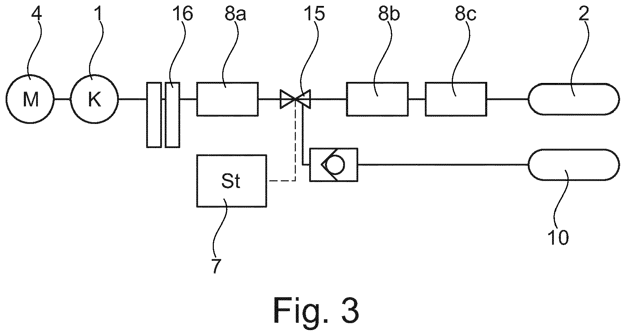

Beim Ausführungsbeispiel nach Figur 3 sind im Gegensatz zu dem vorstehend beschriebenen Ausführungsbeispiel Lufttrocknereinheiten 8a bis 8c in Reihe geschaltet, um im Rahmen einer Hauptluftversorgung den Hauptluftbehälter 2 zu füllen. Hierfür wird bei diesem Ausführungsbeispiel lediglich ein Kompressor 1 mit zugeordnetem Elektromotor 4 verwendet.

Zur Hilfsluftversorgung wird allerdings nur die erste Lufttrocknereinheit 8a der Reihe verwendet, nach welcher der getrocknete Hilfsluftstrom nach Maßgabe der Steuerung 7 über das Ventil 15 abgezweigt wird. Die Hilfsluft dient der Befüllung des Hilfsluftbehälters 10.

Die Erfindung ist nicht beschränkt auf die vorstehend beschriebenen exemplarischen Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass auch bei der Reihenschaltung von mehreren Lufttrocknereinheiten auch mehrere Kompressoren zur Drucklufterzeugung genutzt werden können. Ebenso kann das Ventil 15 bzw. 15a bis 15c zur Aktivierung der je zugeordneten Lufttrocknereinheit 8; 8a bis 8c auch in Hauptluftströmungsrichtung vor den Lufttrocknereinheiten angeordnet werden. Ein Rückschlagventilbeschaltung der Leitungen ist dort vorzusehen, wo ein Rückströmen von Behälterluft verhindert werden soll. Die Lufttrocknereinheiten 8; 8a bis 8c können als Adsorptionslufttrockner, Membranluftrockner oder dergleichen ausgeführt sein, sofern hierbei ein Regenerationsbetrieb mittels getrockneter Druckluft vorgesehen ist.

### BEZUGSZEICHENLISTE

- 1: Kompressor
- 2: Hauptluftbehälter
- 3: Hauptluftbehälterleitung
- 4: Elektromotor
- 5: Pantograph
- 6: Fahrzeugbatterie
- 7: Steuereinheit
- 8: Lufttrocknereinheit
- 9: Schaltventil
- 10: Hilfsluftbehälter
- 11: Rückschlagventil
- 12: Drucksensor
- 13: Drucksensor
- 14: Umschaltventil
- 15: Ventil
- 16: Vorfilter

## Patentansprüche

1. Verfahren zur Steuerung mindestens einer Lufttrocknereinheit (8; 8a - 8c) einer Luftversorgungsanlage für die Haupt- und Hilfsluftversorgung eines Fahrzeuges, bei welchem durch mindestens einen über einen zugeordneten Elektromotor (4; 4a - 4c) angetriebenen Kompressor (1; 1a - 1c) sowohl die Hauptluftversorgung eines Hauptluftbehälters (2) als auch die Hilfsluftversorgung eines Hilfsluftbehälters (10) durchgeführt wird, wobei die vom Kompressor (1; 1a - 1c) erzeugte Druckluft über die mindestens eine nachgeschaltete Lufttrocknereinheit (8; 8a - 8c) geleitet wird, mit der die vom Kompressor (1; 1a - 1c) erzeugte Druckluft getrocknet wird, wobei das Trockenmittel der Lufttrocknereinheit (8; 8a - 8c) mit getrockneter Druckluft regeneriert wird,
**dadurch gekennzeichnet, dass** während der Hilfsluftversorgung der zur Regeneration der mindestens einen Lufttrocknereinheit (8; 8a - 8c) verwendete Luftstrom reduziert oder unterbunden wird, so dass bei der Hilfsluftversorgung gegenüber der Hauptluftversorgung ein höherer bzw. der gesamte durch den Kompressor (1; 1a - 1c) gelieferte Volumenstrom zum Auffüllen des Hilfsluftbehälters (10) zur Verfügung steht.

2. Verfahren nach Anspruch 1,
**dadurch gekennzeichnet, dass** nach dem Ausschalten des mindestens einen Kompressors (1; 1a - 1c) trockene Druckluft aus einem Hauptluftbehälter (2) und/oder einem Hilfsluftbehälter (10) zur Regeneration des Trockenmittels durch die mindestens einen Lufttrocknereinheit (8, 8', 8") geleitet wird.

3. Verfahren nach Anspruch 1,
**dadurch gekennzeichnet, dass** eine Umschaltung der mindestens einen Lufttrocknereinheit (8, 8', 8") in die Phase der Hilfsluftversorgung in Abhängigkeit vom Druck im Hilfsluftbehälter (10) durchgeführt wird.

4. Verfahren nach Anspruch 1,
**dadurch gekennzeichnet, dass** mehrere Kompressoren (1; 1a - 1c) mit unterschiedlicher Förderleistung für die Haupt- und Hilfsluftversorgung eingesetzt werden, wobei in der Phase der Hilfsluftversorgung zum Aufrüsten des Fahrzeuges ein Kompressor (1a) mit geringerer Förderleistung über eine Fahrzeugbatterie (6) betrieben wird.

5. Verfahren nach Anspruch 1,
**dadurch gekennzeichnet, dass** in der Phase der Hauptluftversorgung durch den mindestens einen Kompressor (1; 1a - 1c) der Hauptluftbehälter (2) mit Druckluft gefüllt wird, mit welchem zumindest eine pneumatische Bremsanlage mit Druckluft gespeist wird.

6. Verfahren nach Anspruch 1,
**dadurch gekennzeichnet, dass** in der Phase der Hilfsluftversorgung durch den mindestens einen Kompressor (1; 1a - 1c) der Hilfsluftbehälter (10) mit Druckluft gefüllt wird, mit welchem ein pneumatischer Stellantrieb für die Betätigung eines Pantographen (5) und/oder Hauptschalters mit Druckluft gespeist wird.

7. Einrichtung zur Steuerung mindestens einer Lufttrocknereinheit (8; 8a - 8c) einer Luftversorgungsanlage für die Haupt- und Hilfsluftversorgung eines Fahrzeuges, bei welchem mindestens ein über einen zugeordneten Elektromotor (4; 4a - 4c) angetriebener Kompressor (1; 1a - 1c) sowohl die Hauptluftversorgung eines Hauptluftbehälters (3) als auch die Hilfsluftversorgung eines Hilfsluftbehälters (10) durchführt, wobei die erzeugte Druckluft über die mindestens eine nachgeschaltete Lufttrocknereinheit (8, 8', 8") strömt, welche die vom Kompressor (1; 1a - 1c) erzeugte Druckluft trocknet, wobei die Lufttrocknereinheit (8; 8a - 8c) das Trockenmittel der Lufttrocknereinheit (8; 8a - 8c) mit getrockneter Druckluft regeneriert,
**dadurch gekennzeichnet, dass** eine Steuereinheit (7) während der Hilfsluftversorgung den zur Regeneration der mindestens einen Lufttrocknereinheit (8; 8a - 8c) verwendete Luftstrom reduziert oder unterbindet, so dass bei der Hilfsluftversorgung gegenüber der Hauptluftversorgung ein höherer bzw. der gesamte durch den Kompressor (1; 1a - 1c) gelieferte Volumenstrom zum Auffüllen des Hilfsluftbehälters (10) zur Verfügung steht.

8. Einrichtung nach Anspruch 7,
**dadurch gekennzeichnet, dass** die Luftversorgungsanlage mehrere Lufttrocknereinheiten (8; 8a - 8c) umfasst, die zueinander parallel geschaltet sind, wobei mindestens ein Ventil (15; 15a - 15c) zur Aktivierung einer oder ein Teil der Lufttrocknereinheiten (8; 8a - 8c) in der Phase der Hilfsluftversorgung vorgesehen ist.

9. Einrichtung nach Anspruch 7,
**dadurch gekennzeichnet, dass** die Luftversorgungsanlage mehrere Lufttrocknereinheiten (8; 8a - 8c) umfasst, die zueinander in Reihe geschaltet sind, wobei mindestens ein Ventil (15) zur Aktivierung einer der Lufttrocknereinheiten (8; 8a - 8c) in der Phase der Hilfsluftversorgung vorgesehen ist.

10. Einrichtung nach Anspruch 7,
**dadurch gekennzeichnet, dass** die Steuereinheit (7) über mindestens ein Umschaltventil (14) im ausgeschalteten Zustand des mindestens einen Kompressors (1; 1a - 1c) trockene Druckluft aus dem Hauptluftbehälter (2) und/oder dem Hilfsluftbehälter (10) zur Regeneration des Trockenmittels der Luftversorgungsanlage durch die mindestens eine Lufttrocknereinheit (8; 8a - 8c) leitet.

11. Einrichtung nach Anspruch 7,
**dadurch gekennzeichnet, dass** die Lufttrocknereinheit (8; 8a - 8c) als ein Adsorbtionslufttrockner ausgebildet ist, dessen mit Trockenmittel befüllten Lufttrocknerpatronen im Trocken- und Regenerationsbetrieb betreibbar sind.

12. Einrichtung nach Anspruch 7,
**dadurch gekennzeichnet, dass** die Lufttrocknereinheit (8; 8a - 8c) als ein Membranlufttrockner ausgebildet ist, deren Filtrationsmembranen als Trockenmittel im Trocken- und Regenerationsbetrieb betreibbar sind.

## Claims

1. Method for controlling at least one air drier unit (8; 8a-8c) of an air supply system for the primary and auxiliary air supply of a vehicle, in which both the primary air supply of a primary air vessel (2) and the auxiliary air supply of an auxiliary air vessel (10) are implemented by means of at least one compressor (1; 1a-1c) which is driven by means of an assigned electric motor (4; 4a-4c), wherein the compressed air which is generated by the compressor (1; 1a-1c) is conducted via the at least one downstream air drier unit (8; 8a-8c) with which the compressed air which is generated by the compressor (1; 1a-1c) is dried, wherein the desiccant of the air drier unit (8; 8a-8c) is regenerated with dried compressed air,
**characterised in that** during the auxiliary air supply the air flow used for regenerating the at least one air drier unit (8; 8a-8c) is reduced or suppressed, with the result that, during the auxiliary air supply, a higher volume flow in comparison to the primary air supply, or the total volume flow which is delivered by the compressor (1; 1a-1c) is available for filling the auxiliary air vessel (10).

2. Method according to claim 1,
**characterised in that** after the at least one compressor (1; 1a-1c) has been switched off, dry compressed air is conducted from a primary air vessel (2) and/or an auxiliary air vessel (10) through the at least one air drier unit (8, 8', 8") in order to regenerate the desiccant.

3. Method according to claim 1,
**characterised in that** switching over the at least one air drier unit (8, 8', 8") into the phase of the auxiliary air supply is carried out as a function of the pressure in the auxiliary air vessel (10).

4. Method according to claim 1,
**characterised in that** a plurality of compressors (1; 1a-1c) with different delivery capacities are used for the primary air supply and auxiliary air supply, wherein in the phase of the auxiliary air supply a compressor (1a) with a lower delivery capacity is operated by means of a vehicle battery (6) in order to upgrade the vehicle.

5. Method according to claim 1,
**characterised in that** in the phase of the primary air supply the primary air vessel (2) is filled with compressed air by means of the at least one compressor (1; 1a-1c), with which at least one pneumatic brake system is supplied with compressed air.

6. Method according to claim 1,
**characterised in that** in the phase of the auxiliary air supply the auxiliary air vessel (10) is filled with compressed air by the at least one compressor (1; 1a-1c), with which a pneumatic actuator for activating a pantograph (5) and/or primary switch is supplied with compressed air.

7. Device for controlling at least one air drier unit (8; 8a-8c) of an air supply system for the primary and auxiliary air supply of a vehicle, in which at least one compressor (1; 1a-1c) which is driven by means of an assigned electric motor (4; 4a-4c) implements both the primary air supply of a primary air vessel (3) and the auxiliary air supply of an auxiliary air vessel (10), wherein the generated compressed air flows via the at least one downstream air drier unit (8, 8', 8") which dries the compressed air which is generated by the compressor (1; 1a-1c), wherein the air drier unit (8; 8a-8c) regenerates the drying agent of the air drier unit (8; 8a-8c) with dried compressed air,
**characterised in that** during the auxiliary air supply a control unit (7) reduces or suppresses the air flow which is used to regenerate the at least one air drier unit (8; 8a-8c), with the result that, during the auxiliary air supply, a higher volume flow in comparison to the primary air supply, or the total volume flow which is delivered by the compressor (1; 1a-1c) is available for filling the auxiliary air vessel (10).

8. Device according to claim 7,
**characterised in that** the air supply system comprises a plurality of air drier units (8; 8a-8c) which are connected in parallel to one another, wherein at least one valve (15; 15a-15c) is provided for activating one or some of the air drier units (8; 8a-8c) in the phase of the auxiliary air supply.

9. Device according to claim 7,
**characterised in that** the air supply system comprises a plurality of air drier units (8; 8a-8c) which are connected in series with one another, wherein at least one valve (15) is provided for activating one of the air drier units (8; 8a-8c) in the phase of the auxiliary air supply.

10. Device according to claim 7,
**characterised in that** in the switched-off state of the at least one compressor (1; 1a-1c), the control unit (7) conducts dry compressed air from the primary air vessel (2) and/or the auxiliary air vessel (10) through the at least one air drier unit (8; 8a-8c) in order to regenerate the desiccant of the air supply system.

11. Device according to claim 7,
**characterised in that** the air drier unit (8; 8a-8c) is embodied as an adsorption air drier, the air drier cartridges of which, which are filled with desiccant, can be operated in the drying mode and regeneration mode.

12. Device according to claim 7,
**characterised in that** the air drier unit (8; 8a-8c) is embodied as a diaphragm air drier, the filtration diaphragms of which can be operated as desiccants in the drying and regeneration mode.

## Revendications

1. Procédé de commande d'au moins une unité (8; 8a-8c) de dessiccation d'air d'une installation d'alimentation en air pour l'alimentation en air principal et auxiliaire d'un véhicule, dans lequel on effectue à la fois l'alimentation en air principal d'un réservoir (2) d'air principal et l'alimentation en air auxiliaire d'un réservoir (10) d'air auxiliaire par au moins un compresseur (1; 1a-1c) entraîné par un moteur (4; 4a-4c) électrique associé, l'air comprimé produit par le compresseur (1; 1a-1c) passant par la au moins une unité (8; 8a-8c) de dessiccation d'air en aval, par laquelle l'air comprimé produit par le compresseur (1; 1a-1c) est séché, l'agent dessiccateur de l'unité (8; 8a-8c) de dessiccation d'air étant régénéré par l'air comprimé séché,
**caractérisé en ce que** pendant l'alimentation en air auxiliaire, on réduit et on supprime le courant d'air utilisé pour la régénération de la au moins une unité (8; 8a-8c) de dessiccation d'air, de manière à disposer, pour remplir le réservoir (10) d'air auxiliaire, lors de l'alimentation en air auxiliaire par rapport à l'alimentation en air principal d'un courant en volume plus grand ou de tout le courant en volume fourni par le compresseur (1; 1a-1c) pour remplir le réservoir (10) d'air auxiliaire.

2. Procédé suivant la revendication 1,
**caractérisé en ce qu'**après la mise hors circuit du au moins un compresseur (1; 1a-1c), on envoie de l'air comprimé séché d'un réservoir (2) d'air principal et/ou d'un réservoir (10) d'air auxiliaire à la au moins une unité (8, 8', 8") de dessiccation d'air pour régénérer l'agent dessiccateur.

3. Procédé suivant la revendication 1,
**caractérisé en ce que** l'on fait passer la au moins une unité (8, 8', 8") de dessiccation d'air dans la phase de l'alimentation en air auxiliaire en fonction de la pression dans le réservoir (10) d'air auxiliaire.

4. Procédé suivant la revendication 1,
**caractérisé en ce que** l'on utilise plusieurs compresseurs (1; 1a-1c) ayant une puissance de refoulement différente pour l'alimentation en air principal et l'alimentation en air auxiliaire, dans lequel dans la phase de l'alimentation en air auxiliaire pour la vérification du véhicule, on fait fonctionner un compresseur (1a) ayant une puissance de refoulement plus petite par une batterie (16) du véhicule.

5. Procédé suivant la revendication 1,
**caractérisé en ce que**, dans la phase de l'alimentation en air principal, on remplit par le au moins un compresseur (1; la-1c) d'air comprimé le réservoir (2) d'air principal, par lequel au moins un système de freinage pneumatique est alimenté en air comprimé.

6. Procédé suivant la revendication 1,
**caractérisé en ce que** dans la phase de l'alimentation en air auxiliaire, on remplit par le au moins un compresseur (1; la-1c) d'air comprimé le réservoir (10) auxiliaire, par lequel un organe moteur pneumatique d'actionnement d'un pantographe (5) et/ou d'un interrupteur principal est alimenté en air comprimé.

7. Dispositif de commande d'au moins une unité (8; 8a-8c) de dessiccation d'air d'une installation d'alimentation en air pour l'alimentation en air principal et auxiliaire d'un véhicule, dans lequel un compresseur (1; 1a-1c) entraîné par un moteur (4; 4a-4c) électrique associé effectue à la fois l'alimentation en air principal d'un réservoir (3) d'air principal et l'alimentation en air auxiliaire d'un réservoir (10) d'air auxiliaire, l'air comprimé produit passant par la au moins une unité (8, 8', 8") de dessiccation d'air en aval qui sèche l'air comprimé produit par le compresseur (1; 1a-1c), l'unité (8; 8a-8c) de dessiccation d'air régénérant l'agent de dessiccation de l'unité (8; 8a-8c) de dessiccation d'air par de l'air comprimé séché,
caractérisé en ce q'une unité (7) de commande, pendant l'alimentation en air auxiliaire, réduit ou supprime le courant d'air utilisé pour la régénération de la au moins une unité (8; 8a-8c) de dessiccation d'air, de manière à disposer, pour remplir le réservoir (10) d'air auxiliaire, lors de l'alimentation en air auxiliaire par rapport à l'alimentation en air principal d'un courant en volume plus grand ou de tout le courant en volume fournit par le compresseur (1; 1a-1c).

8. Dispositif suivant la revendication 7,
**caractérisé en ce que** l'installation d'alimentation en air comprend plusieurs unités (8; 8a-8c) de dessiccation d'air, qui sont montées en parallèle les unes avec les autres, au moins une vanne (15; 15a-15c) d'activation, d'une ou d'une partie des unités (8 ; 8a-8c) de dessiccation d'air dans la phase de l'alimentation en air auxiliaire étant prévue.

9. Dispositif suivant la revendication 7,
**caractérisé en ce que** l'installation d'alimentation en air comprend plusieurs unités (8; 8a-8c) de dessiccation d'air, qui sont montées en série, au moins une vanne (15) d'activation de l'une des unités (8; 8a-8c) de dessiccation d'air dans la phase de l'alimentation en air auxiliaire étant prévue.

10. Dispositif suivant la revendication 7,
**caractérisé en ce que** l'unité (7) de commande envoie par au moins une vanne (14) de commutation, dans l'état hors circuit du au moins un compresseur (1; 1a-1c), de l'air comprimé du réservoir (2) d'air principal et/ou du réservoir (10) d'air auxiliaire pour régénérer l'agent de dessiccation de l'installation d'alimentation en air dans la au moins une unité (8; 8a-8c) de dessiccation d'air.

11. Dispositif suivant la revendication 7,
**caractérisé en ce que** l'unité (8; 8a-8c) de dessiccation d'air est constituée sous la forme d'un sécheur d'air par adsorption dont les cartouches de dessiccateur d'air remplies d'agent de dessiccation peuvent fonctionner en fonctionnement en séchage et en régénération.

12. Dispositif suivant la revendication 7,
**caractérisé en ce que** l'unité (8; 8a-8c) de dessiccation d'air est constituée sous la forme d'un sécheur d'air à membrane, dont les membranes de filtration peuvent fonctionner comme agent de dessiccation en fonctionnement en séchage et en régénération.
